(19) Europäisches Patentamt
European Patent Office
Office européen des brevets

(11) EP 4 692 135 A1

(12) **EUROPEAN PATENT APPLICATION**
published in accordance with Art. 153(4) EPC

(43) Date of publication:
**11.02.2026 Bulletin 2026/07**

(21) Application number: **24803456.3**

(22) Date of filing: **02.05.2024**

(51) International Patent Classification (IPC):
*C08F 8/44 (2006.01)* *C08F 220/04 (2006.01)*
*C08K 5/00 (2006.01)* *C08L 33/02 (2006.01)*
*H01M 10/052 (2010.01)* *H01M 10/0565 (2010.01)*

(52) Cooperative Patent Classification (CPC):
Y02E 60/10

(86) International application number:
**PCT/JP2024/016903**

(87) International publication number:
**WO 2024/232344 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.05.2023 JP 2023076618**

(71) Applicants:
- **Sumitomo Chemical Company, Limited**
  **Tokyo 103-6020 (JP)**
- **Kyoto University**
  **Kyoto-shi, Kyoto 606-8501 (JP)**

(72) Inventors:
- **NAKAJIMA Hideto**
  **Niihama-shi, Ehime 792-8521 (JP)**
- **OUCHI Makoto**
  **Kyoto-shi, Kyoto 606-8501 (JP)**

(74) Representative: **Vossius & Partner Patentanwälte Rechtsanwälte mbB**
**Siebertstraße 3**
**81675 München (DE)**

# (54) POLYMER, ELECTROLYTE COMPOSITION, AND BATTERY

(57) The present disclosure provides a polymer including a structural unit (A) represented by formula (A) and a structural unit (B) represented by formula (B), wherein when solid $^{13}C$ NMR measurement of the polymer is performed at 25°C, a half width of a peak derived from carbonyl carbon of a -COOA group (A is an alkali metal element) is 1380 Hz or less.

[Chem. 1]

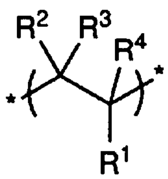

(A)

(In formula (A), $R^1$ is a -COOA group or a monovalent organic group having a -COOA group; $R^2$ to $R^4$ are each independently a hydrogen atom or a monovalent substituent, or one of $R^2$ and $R^3$ forms a ring together with $R^4$.)

[Chem. 2]

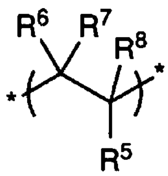

(B)

(In formula (B), $R^5$ is a hydrogen atom or a monovalent substituent; $R^6$ to $R^8$ are each independently a hydrogen atom or a monovalent substituent, or one of $R^6$ and $R^7$ forms a ring together with $R^8$.)

EP 4 692 135 A1

## Description

### Technical Field

The present disclosure relates to a polymer, an electrolyte composition, and a battery.

### Background Art

Batteries that perform charging and discharging through the movement of metal ions between a positive electrode and a negative electrode, such as lithium-ion batteries, are being actively researched due to their high capacity. As electrolytes for lithium-ion batteries and the like, solutions of lithium salts including an organic solvent or an ionic liquid are known. On the other hand, from the viewpoint of safety and processability, research on solid electrolytes, polymer electrolytes, and the like is progressing (Patent Literature 1). In addition to lithium-ion batteries, research is also progressing on batteries using other alkali ions that are more abundant than lithium, such as sodium and potassium.

### Citation List

### Patent Literature

Patent Literature 1: Japanese Unexamined Patent Publication No. 2001-176556

### Summary of Invention

### Technical Problem

However, polymer electrolytes still have room for improvement in terms of ionic conductivity.
The present disclosure has been made in view of the above circumstances, and an object thereof is to provide a polymer with high ionic conductivity, an electrolyte composition, and a battery using the same.

### Solution to Problem

The present disclosure provides, for example, the following [1] to [8].

[1] A polymer including:

a structural unit (A) represented by the following formula (A); and
a structural unit (B) represented by the following formula (B),
wherein the polymer satisfies at least one of the following (1) to (3):

(1) when solid $^{13}C$ NMR measurement of the polymer is performed at 25°C, a half width of a peak derived from carbonyl carbon of a -COOA group (A is an alkali metal element) is 1380 Hz or less;
(2) when $^{13}C$ NMR measurement of the polymer is performed in deuterated methanol at 55°C, a half width of a peak derived from carbonyl carbon of the -COOA group is 80 Hz or less; and
(3) when $^{13}C$ NMR measurement of the polymer is performed in deuterated methanol at 55°C, a ratio of peak height to half width of a peak derived from carbonyl carbon of the -COOA group is $0.4 \times 10^{-4}$ abn/Hz or more.

[Chem. 1]

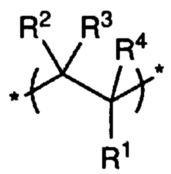

(A)

(In formula (A), $R^1$ is a -COOA group or a monovalent organic group having a -COOA group; $R^2$ to $R^4$ are each independently a hydrogen atom or a monovalent substituent, or one of $R^2$ and $R^3$ is a hydrogen atom or a monovalent substituent and the other forms a ring together with $R^4$; and * represents a bonding site of the structural unit (A) with another structural unit.)

[Chem. 2]

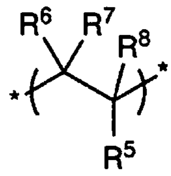

(B)

(In formula (B), $R^5$ is a hydrogen atom or a monovalent substituent; $R^6$ to $R^8$ are each independently a hydrogen atom or a monovalent substituent, or one of $R^6$ and $R^7$ is a hydrogen atom or a monovalent substituent and the other forms a ring together with $R^8$; and * represents a bonding site of the structural unit (B) with another structural unit.)

[2] The polymer of [1], wherein A includes sodium or lithium.

[3] An electrolyte composition including the polymer of [1] or [2].

[4] The electrolyte composition of [3], further including a plasticizer,
wherein the plasticizer includes at least one selected from the group consisting of carbonate-based solvents, ether-based solvents, fluorine-based solvents, and phosphate ester-based solvents.

[5] The electrolyte composition of [3] or [4], further including an anion receptor.

[6] The electrolyte composition of any one of [3] to [5], further including an alkali metal salt.

[7] A polymer obtained by polymerizing a monomer mixture including a monomer (A) having a -COOA group (A is an alkali metal element) and a monomer (B) other than the monomer (A), wherein a reactivity ratio r1 of the monomer (A) and a reactivity ratio r2 of the monomer (B) in a polymerization reaction of the monomer (A) and the monomer (B) are both 0.5 or less.

[8] A battery including the electrolyte composition of any one of [3] to [6].

**Advantageous Effects of Invention**

According to the present disclosure, it is possible to provide a polymer with high ionic conductivity, an electrolyte composition, and a battery using the same.

**Description of Embodiments**

The polymer of the present embodiment has a -COOA group (A is an alkali metal element). The polymer includes a structural unit (A) represented by the following formula (A) and a structural unit (B) represented by the following formula (B). The polymer may be one in which the structural unit (A) and the structural unit (B) have a high tendency to be alternately arranged, and may be an alternating copolymer. The structural units constituting the polymer may not have a structural unit having a carbonyl group other than the structural unit (A), and may consist of the structural unit (A) and the structural unit (B).

[Chem. 3]

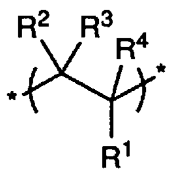

(A)

(In formula (A), $R^1$ is a -COOA group or a monovalent organic group having a -COOA group; $R^2$ to $R^4$ are each independently a hydrogen atom or a monovalent substituent, or one of $R^2$ and $R^3$ is a hydrogen atom or a monovalent substituent and the other forms a ring together with $R^4$; and * represents a bonding site of the structural unit (A) with another structural unit.)

[Chem. 4]

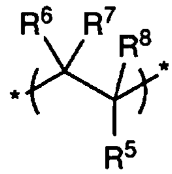

(B)

(In formula (B), $R^5$ is a hydrogen atom or a monovalent substituent; $R^6$ to $R^8$ are each independently a hydrogen atom or a monovalent substituent, or one of $R^6$ and $R^7$ is a hydrogen atom or a monovalent substituent and the other forms a ring together with $R^8$; and * represents a bonding site of the structural unit (B) with another structural unit.)

In the polymer, each structural unit is introduced in a relatively uniformly dispersed manner in the molecular chain of the polymer, and in particular, the uniformity of the environment in which each structural unit (A) in the polymer is placed is high. For this reason, the polymer has a narrow half width of a peak derived from carbonyl carbon in an NMR spectrum measured under predetermined conditions. The presence of the structural units (A) dispersed in a similar environment in the molecular chain of the polymer in this way facilitates the movement of cations of the alkali metal element between the structural units (A), and excellent ionic conductivity can be exhibited. On the other hand, when the environment in which each structural unit (A) is placed differs for each structural unit, such as when the structural unit (A) and the structural unit (B) are randomly arranged in the molecular chain of the polymer, it is considered that the distance between the structural units (A) also varies, for example, a portion where the structural unit (A) does not exist occurs in the molecular chain of the polymer, and once a cation of an alkali metal element strongly interacts with a $-COO^-$ group of the polymer, energy is required for subsequent movement, and the ionic conductivity as a whole is not exhibited as much as expected from the structure. Further, as described above, when structural units (A) with different environments exist, the resonance frequency of the carbonyl carbon of each structural unit (A) is different, and the peak width becomes wider. In other words, by uniformly distributing anions immobilized on the polymer on the polymer chain, $Li^+$ can easily interact with the adjacent $-COO^-$ group and easily move to the adjacent $-COO^-$ group. On the other hand, if the immobilized anions become non-uniform, a portion where no $-COO^-$group exists will be generated on the polymer chain, making it difficult for $Li^+$ to move through that portion. Therefore, when considering $Li^+$ movement along the polymer chain, it is considered important that the anions are uniformly dispersed. On the other hand, in a homopolymer consisting only of the structural unit (A), the immobilized anions are generally present at a close distance to each other. As a result, ionic interaction acts strongly, and the movement of cations of the alkali metal element as counter cations becomes difficult. The polymer of the present embodiment may have a region where the structural unit (A) and the structural unit (B) are alternately arranged.

The polymer has a narrow half width of a peak derived from carbonyl carbon in an NMR spectrum measured under predetermined conditions, and satisfies at least one of the following (1) to (3). In other words, the present disclosure can be said to be based on the idea that the half width of a peak derived from carbonyl carbon in an NMR spectrum is useful as an index for grasping the intramolecular distribution of the structural unit (A) in the polymer.

(1) when solid $^{13}C$ NMR measurement of the polymer is performed at 25°C, a half width of a peak derived from carbonyl carbon of a -COOA group is 1380 Hz or less.
(2) when $^{13}C$ NMR measurement of the polymer is performed in deuterated methanol at 55°C, a half width of a peak derived from carbonyl carbon of the -COOA group is 80 Hz or less.
(3) when $^{13}C$ NMR measurement of the polymer is performed in deuterated methanol at 55°C, a ratio of peak height to half width of a peak derived from carbonyl carbon of the -COOA group is $0.4\times10^{-4}$ abn/Hz or more.

Regarding condition (1), the half width of the peak derived from carbonyl carbon in the solid $^{13}C$-NMR spectrum may be 1350 Hz or less, may be 1330 Hz or less, may be 1300 Hz or less, may be 1280 Hz or less, and may be 1250 Hz or less. Further, the half width of the peak derived from carbonyl carbon in the solid $^{13}C$-NMR spectrum may be 500 Hz or more, may be 600 Hz or more, may be 700 Hz or more, may be 750 Hz or more, and may be 800 Hz or more. It may be 1000 Hz or more, may be 1050 Hz or less, may be 1100 Hz or more, may be 1150 Hz or more, and may be 1200 Hz or less. In this specification, unless otherwise specified, the half width is the full width at half maximum (FWHM). When a plurality of peaks

derived from carbonyl carbon are observed, the half width of the peak with the highest intensity may be in the above range.

Regarding condition (2), the half width of the peak derived from the carbonyl carbon of the -COOA group of the polymer measured in deuterated methanol ($CD_3OD$) may be 70 Hz or less, may be 60 Hz or less, may be 50 Hz or less, and may be 40 Hz or less. The half width of the peak derived from the carbonyl carbon of the -COOA group of the polymer measured in deuterated methanol ($CD_3OD$) may be 5 Hz or more, may be 7 Hz or more, and may be 10 Hz or more.

Regarding condition (3), the ratio of the peak height to the half width (peak height/half width) may be $0.5\times10^{-4}$ abn/Hz or more, may be $0.75\times10^{-4}$ abn/Hz or more, may be $1.0\times10^{-4}$ abn/Hz or more, and may be $1.2\times10^{-4}$ abn/Hz or more. Regarding condition (3), the ratio of the peak height to the half width (peak height/half width) may be $5.0\times10^{-4}$ abn/Hz or less, and may be $3.0\times10^{-4}$ abn/Hz or less.

The polymer of the present embodiment is an alkali metal-containing polymer having an alkali-metallized carboxyl group. In this specification, the alkali-metallized carboxyl group means a group in which H of a -COOH group is substituted with an alkali metal element.

A in the -COOA group may include at least one selected from the group consisting of potassium, sodium, and lithium, may include at least one of sodium and lithium, and may include lithium.

The content of one type of alkali metal element among the alkali metal elements included in the polymer may be 80 mol% or more, may be 85 mol%, and may be 90 mol%. The one type of alkali metal element may be potassium, sodium, or lithium, may be sodium or lithium, and may be lithium.

In the above formula (A), $R^1$ may be a -COOA group itself, or may be a monovalent organic group having a -COOA group. The number of carbon atoms that the monovalent organic group has may be 1 to 20, may be 1 to 15, may be 1 to 10, may be 1 to 5, and may be 1 to 3. The monovalent organic group may have one or more -COOA groups, and may have one -COOA group. Examples of the organic group include a monovalent group such as a group having a -COOA group as a substituent, a hydrocarbon group, a group having a chemical structure formed by substituting one or more carbon atoms (methylene groups) in the hydrocarbon group with a linking group of -O-, -S-, -C(=O)-, or -C(=O)O-, and a group having a heterocycle. The -COOA group is bonded to a carbon atom of another part in $R^1$. Further, the monovalent group may have a substituent that substitutes a hydrogen atom bonded to a carbon atom. Examples of the substituent include an electron-withdrawing group such as a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. Further, the hydrocarbon group may be either a saturated hydrocarbon group or an unsaturated hydrocarbon group. In this specification, an aromatic hydrocarbon group is a hydrocarbon group having an aromatic moiety such as a benzene ring, and may have an aliphatic moiety. Further, in this specification, a cyclic hydrocarbon group is a hydrocarbon group having an aliphatic carbocyclic moiety, and may have a linear or branched aliphatic moiety.

In the above formula (A), $R^1$ may be a group represented by $-R^9$-COOA. Here, $R^9$ is a divalent organic group. The number of carbon atoms that the divalent organic group has may be 1 to 19, may be 1 to 14, may be 1 to 9, may be 1 to 4, and may be 1 or 2. Examples of the divalent organic group include a monovalent group such as a hydrocarbon group, a group having a chemical structure formed by substituting one or more carbon atoms (methylene groups) in the hydrocarbon group with a linking group of -O-, -S-, -C(=O)-, or -C(=O)O-, and a group having a heterocycle. Further, the divalent group may have a substituent that substitutes a hydrogen atom bonded to a carbon atom. Examples of the substituent include an electron-withdrawing group such as a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. Further, the hydrocarbon group may be either a saturated hydrocarbon group or an unsaturated hydrocarbon group.

Examples of the electron-withdrawing group that $R^1$ in the above formula (A) may include a halogen atom, a sulfonic acid group or a salt thereof, a sulfonic acid ester, a nitro group, a nitrile group, a carboxyl group or a salt thereof, and the like. The halogen atom may be at least one of Cl and F, and may be F.

In the above formula (A), when $R^4$ is a monovalent substituent, examples of the substituent include a monovalent organic group. The number of carbon atoms that the monovalent organic group has may be 1 to 20, may be 1 to 15, may be 1 to 10, may be 1 to 5, and may be 1 to 3. Examples of the monovalent organic group include a monovalent group such as a hydrocarbon group, a group having a chemical structure formed by substituting one or more carbon atoms (methylene groups) in the hydrocarbon group with a linking group of -O-, -S-, -C(=O)-, or -C(=O)O-, and a group having a heterocycle. $R^4$ in the above formula (A) may be a hydrogen atom or a methyl group. When $R^4$ in the above formula (A) is a monovalent organic group, $R^2$ or $R^3$ may be a group having a -COOA group, and may be a -COOA group.

In the above formula (A), when $R^2$ or $R^3$ is a monovalent substituent, examples of the substituent include a monovalent organic group. Examples of the monovalent organic group include those exemplified as $R^4$ above. At least one of $R^2$ and $R^3$ may be a hydrogen atom, and both $R^2$ and $R^3$ may be hydrogen atoms. When $R^2$ or $R^3$ in the above formula (A) is a monovalent organic group, $R^4$ may be a group having a -COOA group, and may be a -COOA group.

In the above formula (A), when one of $R^2$ and $R^3$ forms a ring together with $R^4$, the number of ring members of the ring may be 4 to 10, may be 5 to 8, and may be 5 or 6. A substituent may be bonded to a carbon atom that is a ring member.

Examples of the substituent include a halogen atom such as a fluorine atom.

The structural unit (B) is a structural unit other than the structural unit (A) and does not include a -COOA group.

In the above formula (B), when $R^5$ is a monovalent substituent, it may be a monovalent organic group. The number of carbon atoms that the monovalent organic group has may be 1 to 20, may be 2 to 15, and may be 4 to 10. Examples of the organic group include a monovalent group such as a hydrocarbon group, a group having a chemical structure formed by substituting one or more carbon atoms (methylene groups) in the hydrocarbon group with a linking group of -O-, -S-, -C(=O)-, or -C(=O)O-, and a group having a heterocycle, and may be a group having an aromatic ring. The aromatic ring may have at least one of a carbocycle and a heterocycle, and may be a carbocycle. An atom that is a ring member of the aromatic ring that $R^5$ has in the above formula (B) may be bonded to a carbon atom of the ethylene group in formula (B) (the carbon atom to which $R^5$ is directly bonded in formula (B)), and a carbon atom that is a ring member of the aromatic ring that $R^5$ has may be bonded to a carbon atom of the ethylene group in formula (B). The group having an aromatic ring may be either a monocyclic system or a condensed ring system, and may be a group having a benzene ring. The group having an aromatic ring may have a monovalent substituent, and the monovalent substituent may be bonded to a carbon atom that is a ring member of the aromatic ring.

In the above formula (B), when $R^5$ is a group having an aromatic ring, and the group having an aromatic ring has a monovalent substituent bonded to the aromatic ring, examples of the monovalent substituent bonded to the aromatic ring include a monovalent organic group, an electron-withdrawing group such as a halogen atom (excluding those that are monovalent organic groups), an electron-donating group such as an amino group ($-NH_2$) (excluding those that are monovalent organic groups), and the like. As the monovalent substituent bonded to the aromatic ring, examples of the monovalent organic group include a substituted or unsubstituted hydrocarbon group, and a group represented by the formula: $-R^{41}-(W^1-R^{42})_n-W^2R^{43}$. The group represented by the above formula: $-R^{41}-(W^1-R^{42})_n-W^2R^{43}$ may be bonded to the para-position of the benzene ring. $W^1$ may be a divalent group such as -O-, -S-, -C(=O)-, or -C(=O)O-, and may be -O-. $W^2$ may be a divalent group such as -O-, -S-, -C(=O)-, or - C(=O)O-, and may be -O-.

In the group represented by the above formula: $-R^{41}-(W^1-R^{42})_n-W^2R^{43}$, $R^{41}$ is a covalent bond or a divalent organic group. The divalent organic group may be a divalent hydrocarbon group. The number of carbon atoms that the divalent hydrocarbon group has may be 1 to 8, may be 1 to 5, and may be 1 to 3. A hydrogen atom bonded to the divalent hydrocarbon group may be substituted by a substituent such as a monovalent substituent (that is, it may be a substituted hydrocarbon group). Examples of the substituent include a halogen atom such as a fluorine atom. The divalent hydrocarbon group may be either an aromatic hydrocarbon group or an aliphatic hydrocarbon group, and may be an aliphatic hydrocarbon group. The aliphatic hydrocarbon group may be a saturated aliphatic hydrocarbon group, and may be a linear or branched aliphatic hydrocarbon group. Specific examples of the divalent hydrocarbon group may be a methylene group, an ethylene group, a 1,2-propylene group, a 1,3-propylene group, or a group in which some or all of the hydrogen atoms thereof are substituted with a halogen atom such as a fluorine atom, and may be a methylene group.

In the group represented by the above formula: $-R^{41}-(W^1-R^{42})n-W^2R^{43}$, $R^{42}$ is a divalent organic group, and may be a divalent hydrocarbon group. The number of carbon atoms that the divalent hydrocarbon group has may be 1 to 8, may be 1 to 5, and may be 1 to 3. A hydrogen atom bonded to the divalent hydrocarbon group may be substituted by a substituent such as a monovalent substituent (that is, it may be a substituted hydrocarbon group). Examples of the substituent include a halogen atom such as a fluorine atom. The divalent hydrocarbon group may be either an aromatic hydrocarbon group or an aliphatic hydrocarbon group, and may be an aliphatic hydrocarbon group. The aliphatic hydrocarbon group may be a saturated aliphatic hydrocarbon group, and may be a linear or branched aliphatic hydrocarbon group. Specific examples of the divalent hydrocarbon group may be a methylene group, an ethylene group, a 1,2-propylene group, a 1,3-propylene group, or a group in which some or all of the hydrogen atoms thereof are substituted with a halogen atom such as a fluorine atom, and may be an ethylene group. In the group represented by the above formula: $-R^{41}-(W^1-R^{42})_n-W^2R^{43}$, n may be 1 to 10, may be 1 to 5, and may be 1 to 3. The n may be an integer or a rational number (for example, when n is an average value over the structural units (B) that the polymer has). When there are a plurality of the $R^{42}$s in one structural unit, they may be different or the same.

In the group represented by the above formula: $-R^{41}-(W^1-R^{42})_n-W^2R^{43}$, $R^{43}$ may be a hydrogen atom or a divalent hydrocarbon group. The number of carbon atoms that the monovalent hydrocarbon group has may be 1 to 8, may be 1 to 5, and may be 1 to 3. A hydrogen atom bonded to the monovalent hydrocarbon group may be substituted by a substituent such as a monovalent substituent (that is, it may be a substituted hydrocarbon group). Examples of the substituent include a halogen atom such as a fluorine atom. The monovalent hydrocarbon group may be either an aromatic hydrocarbon group or an aliphatic hydrocarbon group, and may be an aliphatic hydrocarbon group. The aliphatic hydrocarbon group may be a saturated aliphatic hydrocarbon group, and may be a linear or branched aliphatic hydrocarbon group. Specific examples of the divalent hydrocarbon group may be a methyl group, an ethyl group, an isopropyl group, an n-propyl group, or a group in which some or all of the hydrogen atoms thereof are substituted with a halogen atom such as a fluorine atom, and may be a methyl group.

The structural unit (B) may include at least one type of structural unit derived from a monomer represented by the following formula (B 1).

[Chem. 5]

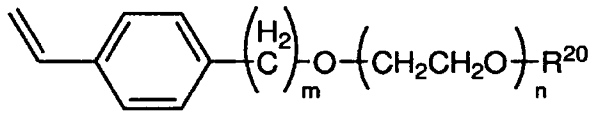

(B 1)

(In the formula, m is 0 to 4, and n is 0 to 10. $R^{20}$ may be a hydrogen atom or an alkyl group having 1 to 4 carbon atoms. The alkyl group may be a methyl group or an ethyl group, and may be a methyl group.)

In the above formula (B1), m may be 1 to 3, may be 1 to 2, and may be 1. The m may be an integer, or may be an average value over all structural units derived from the monomer represented by formula (B1) included in the polymer (in this case, m is a rational number). In formula (B1), n may be 1 to 4, and may be 1 to 3. The n may be an integer, or may be an average value over all structural units derived from the monomer represented by formula (B1) included in the polymer (in this case, n is a rational number).

In the above formula (B), when at least one of $R^6$ to $R^8$ is a monovalent substituent, examples of the substituent include a monovalent organic group. Examples of the monovalent organic group include those exemplified as $R^4$ above. At least one of $R^6$ to $R^8$ in the above formula (B) may be a hydrogen atom, and all of $R^6$ to $R^8$ may be hydrogen atoms.

The polymer according to the present disclosure includes a plurality of structural units (A), but the plurality of structural units (A) may be the same as or different from each other, and may include a plurality of types of structural units (A) with different chemical structures. Further, the polymer according to the present disclosure may include a plurality of structural units (B), and when a plurality of structural units (B) are included, the plurality of structural units (B) may be the same as or different from each other, and may include a plurality of types of structural units (B) with different chemical structures.

The number average molecular weight (Mn) of the polymer according to the present disclosure may be 5000 to 400000, may be 8000 to 200000, may be 10000 to 150000, may be 10000 to 100000, and may be 10000 to 50000. The number average molecular weight of the polymer can be measured by gel permeation chromatography.

The gel permeation chromatography (GPC) shall be measured under the conditions shown below. For the creation of the calibration curve, standard samples of polymethyl methacrylate (manufactured by Polymer Laboratories, Mn of 800 to 2200000) shall be used as standard substances.

<GPC Measurement Conditions>

Apparatus: GPC-104 (Shodex)

DU-H2000 precision pump
74S-RI refractive-index detector
41-UV UV/vis detector

Column: Shodex LF-404
Temperature: 40°C
Solvent: Tetrahydrofuran (THF)
Flow rate: 0.3 mL/min
Back pressure: 3.0 MPa
Detection: RI
Sample concentration: 0.5 mass% THF solution
Injection volume: 10 μL

Examples of the method for producing the polymer of the present embodiment include a method of radically polymerizing a monomer composition including a monomer such that the monomer reactivity ratio is 0.5 or less. The monomer reactivity ratio can be calculated by the Fineman-Ross method or the Kelen-Tuedos method. As the method for producing the polymer, specifically, the following two production methods (production method (I) and production method (II)) can be exemplified.

(I) A method including a step of polymerizing a monomer mixture including a monomer (A') having a functional group capable of inducing a -COOA group and a monomer (B) other than the monomer (A') and a monomer obtained by

converting the functional group of the monomer (A') to a -COOA group, to obtain a raw material polymer, and a step of converting the functional group in the raw material polymer to a -COOA group. The monomer (A') and the monomer (B) can be selected such that a reactivity ratio r1' of the monomer (A') and a reactivity ratio r2' of the monomer (B) in a polymerization reaction of the monomer (A') and the monomer (B) are both 0.5 or less.

(II) A method including a step of polymerizing a monomer mixture including a monomer (A) having a -COOA group and a monomer (B) other than the monomer (A), wherein a reactivity ratio r1 of the monomer (A) and a reactivity ratio r2 of the monomer (B) in a polymerization reaction of the monomer (A) and the monomer (B) are both 0.5 or less.

Here, in the production method (I), the structural unit derived from the monomer (A') becomes the structural unit (A) by converting the functional group capable of inducing a -COOA group to a -COOA group after being incorporated as a structural unit in the raw material polymer. In this specification, unless otherwise specified, a structural unit derived from a monomer means, in the case of radical polymerization, a structural unit having a chemical structure directly obtained by radically polymerizing the monomer.

Examples of the monomer (A') include those represented by the following formula (MA'). In formula (MA'), $R^{1'}$ to $R^{4'}$ may correspond to $R^1$ to $R^4$ of formula (A), respectively.

[Chem. 6]

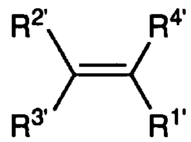

**(MA')**

(In formula (MA'), $R^{1'}$ is a functional group capable of inducing a -COOA group; $R^2$ to $R^4$ are each independently a hydrogen atom or a monovalent substituent, or one of $R^2$ and $R^3$ is a hydrogen atom or a monovalent substituent and the other forms a ring together with $R^4$. The A is an alkali metal element.)

Examples of the functional group capable of inducing a -COOA group that the monomer (A') has include a group that is hydrolyzed to become a -COOH group. Examples of the group that is hydrolyzed to become a -COOH group may be, for example, a -COOR group (R is a monovalent organic group, and may be a substituted or unsubstituted hydrocarbon group, and may be a substituted or unsubstituted alkyl group), and may include the following functional groups and the like.

[Chem. 7]

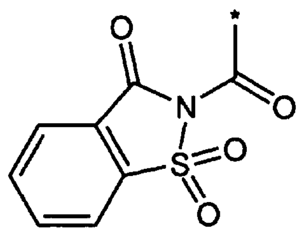

(In the formula, * is a bonding site of the functional group, and a hydrogen atom of the benzene ring may be substituted by a substituent.)

In the polymerization reaction of the monomer (A') and the monomer (B) in the production method (I), the reactivity ratio r1' of the monomer (A') may be 0.4 or less, may be 0.3 or less, may be 0.2 or less, and may be 0.05 or less. In the polymerization reaction of the monomer (A') and the monomer (B), the reactivity ratio r2' of the monomer (B) may be 0.4 or less, may be 0.3 or less, may be 0.2 or less, and may be 0.05 or less.

In the production method (II), the reactivity ratio r1 of the monomer (A) in the polymerization reaction of the monomer (A) and the monomer (B) may be 0.4 or less, may be 0.3 or less, may be 0.2 or less, and may be 0.05 or less. In the polymerization reaction of the monomer (A) and the monomer (B), the reactivity ratio r2 of the monomer (B) may be 0.4 or less, may be 0.3 or less, may be 0.2 or less, and may be 0.05 or less.

Even when r1 and r2 are large in the production method (II) (for example, when both are greater than 0.5), the half width of the NMR spectrum of the polymer obtained by selecting a monomer (A') that can induce the same structural unit as the structural unit derived from the monomer (A) and has a low reactivity ratio in the polymerization reaction with the

monomer (B) can be brought into a predetermined range.

In the polymerization of two or more types of monomers having an ethylenically unsaturated group, generally, when the monomer reactivity ratio of the monomers is less than 1, the alternating copolymerizability increases. Further, when a monomer X in which the ethylenically unsaturated group is electron-deficient and a monomer Y in which the ethylenically unsaturated group is electron-rich are polymerized, a copolymer in which the monomer X and the monomer Y are alternately arranged is easily obtained.

In the production method (I), when the ethylenically unsaturated group in the monomer (A') is electron-deficient and the ethylenically unsaturated group in the monomer (B) is electron-rich, a polymer in which structural units derived from the monomer (A') and structural units derived from the monomer (B) are alternately arranged is easily obtained. Therefore, a monomer having an electron-withdrawing group may be used as the monomer (A'). Further, a monomer having an aromatic ring directly bonded to the ethylenically unsaturated group may be used as the monomer (B). The monomer (B) may further have an electron-donating group.

In the production method (II), when the ethylenically unsaturated group in the monomer (A) is electron-deficient and the ethylenically unsaturated group in the monomer (B) is electron-rich, a polymer in which structural units derived from the monomer (A) and structural units derived from the monomer (B) are alternately arranged is easily obtained. Therefore, a monomer having an electron-withdrawing group may be used as the monomer (A). Further, a monomer having an aromatic ring directly bonded to the ethylenically unsaturated group may be used as the monomer (B). The monomer (B) may further have an electron-donating group.

The polymer obtained by the production method of the present embodiment can be used as a component of an electrolyte composition. One embodiment of the electrolyte composition may include the polymer and, if necessary, components other than the polymer. Examples of such components include an anion receptor, a plasticizer, an alkali metal salt, other resins such as a fluorine-based resin (such as a binding resin), a fabric such as a non-woven fabric, a porous material, a viscosity adjusting material, and the like.

The electrolyte composition may include an anion receptor. The anion receptor refers to a chemical species that captures an anion by forming an electrostatic interaction, a hydrogen bond, an acid-base complex, or the like with the anion. The anion receptor captures a counter anion of an alkali metal ion and promotes dissociation between the counter anion and the alkali metal ion. This increases the mobility of the metal ion. As a result, the conductivity and transference number of the alkali metal ion of the electrolyte composition also tend to improve.

Low-molecular-weight chemical species (compounds, etc.) that function as the anion receptor are known, and examples thereof include compounds described in U.S. Patent No. 6,022,643, U.S. Patent No. 5,705,689, U.S. Patent No. 6,120,941, and the like. The anion receptor may have, for example, a formula weight (molecular weight) of 1000 or less, may be 800 or less, and may be 500 or less.

The anion receptor may have Lewis acidity. In this case, the anion receptor can capture an anion by accepting a non-bonding electron pair of the anion and forming an acid-base complex. Examples of such a compound include a compound having an electron-deficient atom. The electron-deficient atom refers to an atom that is covalently bonded to another atom but has fewer than eight electrons in its outermost shell. Examples of the electron-deficient atom include an atom belonging to Group 13 of the periodic table, and more specifically, may be at least one of an aluminum atom and a boron atom, and may be a boron atom.

Examples of the anion receptor having a boron atom include a boron compound that functions as a Lewis acid, and may be diborane, a compound represented by the following chemical formulas IA to IE, or the like.

[Chem. 8]

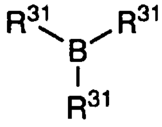

IA

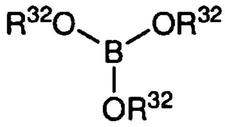

IB

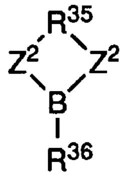

IC

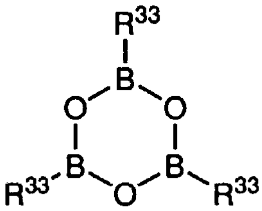

ID

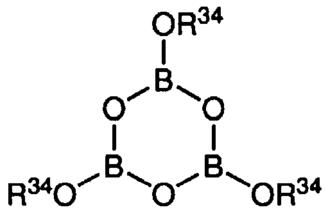

IE

In formula IA, $R^{31}$ is a halogen atom or a monovalent organic group. The halogen atom may be a fluorine atom or a chlorine atom, and may be a fluorine atom. The number of carbon atoms that the monovalent organic group has may be 1 to 20, may be 1 to 15, may be 2 to 10, and may be 2 to 6. The monovalent organic group is not particularly limited, and may be a monovalent group or the like having a chemical structure in which one or more carbon atoms (methylene groups) in a hydrocarbon group are substituted by a linking group of -O-, -S-, -C(=O)-, or -C(=O)O-. A hydrogen atom bonded to a hydrocarbon portion in the monovalent organic group may be substituted by a substituent. Here, the monovalent organic group is bonded to the boron atom (B) in formula IA by a carbon atom that the monovalent organic group has. The substituent may be a monovalent substituent such as a halogen atom, may be a monovalent electron-withdrawing group, and may be a fluorine atom. The monovalent organic group may be a hydrocarbon group or a halogen-substituted hydrocarbon group, and the halogen-substituted hydrocarbon group may be a partially or fully fluorinated hydrocarbon group. In one molecule, the plurality of $R^{31}$s may be different from each other or may all be the same.

In formula IB, $R^{32}$ is a hydrogen atom or a monovalent organic group. The number of carbon atoms that the monovalent organic group has may be 1 to 20, may be 1 to 15, may be 2 to 10, and may be 2 to 6. The monovalent organic group is not particularly limited, and may be a monovalent group or the like having a chemical structure in which one or more carbon atoms (methylene groups) in a hydrocarbon group are substituted by a linking group of -O-, -S-, -C(=O)-, or -C(=O)O-. Here, the monovalent organic group is bonded to the oxygen atom (O) in formula IB by a carbon atom that the monovalent organic group has. A hydrogen atom bonded to a hydrocarbon portion in the monovalent organic group may be substituted by a substituent. The substituent may be a monovalent substituent such as a halogen atom, may be a monovalent electron-withdrawing group, and may be a fluorine atom. The monovalent organic group may be a hydrocarbon group or a halogen-substituted hydrocarbon group, and the halogen-substituted hydrocarbon group may be a partially or fully fluorinated hydrocarbon group. In one molecule, the plurality of $R^{12}{}_{S}$ may be different from each other or may all be the same.

In formula IC, $R^{35}$ is a divalent organic group, and $Z^2$ is a covalent bond or an oxygen atom. The number of carbon atoms that the divalent organic group has may be 1 to 15, may be 2 to 10, and may be 3 to 8. In formula IC, $R^{35}$, the two $Z^2$s, and the boron atom (B) form a ring, and the number of ring members of the ring may be 4 to 8, and may be 5 or 6. The divalent organic group is not particularly limited, and may be a divalent group or the like having a chemical structure in which one or more carbon atoms (methylene groups) in a hydrocarbon group are substituted by a linking group of -O-, -S-, -C(=O)-, or -C(=O)O-. Here, when the $Z^2$ is an oxygen atom, the divalent organic group is bonded to $Z^2$ in formula IC by a carbon atom that the divalent organic group has, and when the $Z^2$ is a covalent bond, the divalent organic group is bonded to the boron atom (B) in formula IC by a carbon atom that the divalent organic group has. A hydrogen atom bonded to a hydrocarbon portion in the divalent organic group may be substituted by a substituent. The substituent may be a monovalent substituent such as a halogen atom, may be a monovalent electron-withdrawing group, and may be a fluorine atom. The divalent organic group may be a hydrocarbon group or a halogen-substituted hydrocarbon group, and

the halogen-substituted hydrocarbon group may be a partially or fully fluorinated hydrocarbon group. In one molecule represented by formula IC, the plurality of $Z^2$s may be different from each other or may all be the same.

In formula IC, $R^{36}$ is a hydrogen atom or a monovalent organic group. The monovalent organic group may be a group bonded to the boron atom (B) in formula IC by a carbon atom that the monovalent organic group has, or may be a group represented by $-OR^{37}$. $R^{37}$ in the group represented by $-OR^{37}$ is a hydrogen atom or a monovalent organic group. The monovalent organic group as $R^{37}$ is bonded to the oxygen atom of - $OR^{37}$ by a carbon atom that the monovalent organic group has. When $R^{36}$ is a monovalent organic group, the number of carbon atoms that the organic group has may be 1 to 20, may be 1 to 15, may be 2 to 10, and may be 2 to 6. The number of carbon atoms that the monovalent organic group as $R^{37}$ has may be 1 to 20, may be 1 to 15, may be 2 to 10, and may be 2 to 6. The monovalent organic group is not particularly limited, and may be a monovalent group or the like having a chemical structure in which one or more carbon atoms (methylene groups) in a hydrocarbon group are substituted by a linking group of -O-, -S-, -C(=O)-, or -C(=O)O-. A hydrogen atom bonded to a hydrocarbon portion in the monovalent organic group may be substituted by a substituent. Here, the monovalent organic group is bonded to the boron atom (B) in formula IA by a carbon atom that the monovalent organic group has. The substituent may be a monovalent substituent such as a halogen atom, may be a monovalent electron-withdrawing group, and may be a fluorine atom. The monovalent organic group may be a hydrocarbon group or a halogen-substituted hydrocarbon group, and the halogen-substituted hydrocarbon group may be a partially or fully fluorinated hydrocarbon group.

In formula ID, $R^{33}$ is a hydrogen atom, a halogen atom, or a monovalent organic group. The halogen atom may be a fluorine atom or a chlorine atom, and may be a fluorine atom. The number of carbon atoms that the monovalent organic group has may be 1 to 20, may be 1 to 15, may be 2 to 10, and may be 2 to 6. The monovalent organic group is not particularly limited, and may be a monovalent group or the like having a chemical structure in which one or more carbon atoms (methylene groups) in a hydrocarbon group are substituted by a linking group of -O-, -S-, - C(=O)-, or -C(=O)O-. A hydrogen atom bonded to a hydrocarbon portion in the monovalent organic group may be substituted by a substituent. Here, the monovalent organic group is bonded to the boron atom (B) in formula ID by a carbon atom that the monovalent organic group has. The substituent may be a monovalent substituent such as a halogen atom, may be a monovalent electron-withdrawing group, and may be a fluorine atom. The monovalent organic group may be a hydrocarbon group or a halogen-substituted hydrocarbon group, and the halogen-substituted hydrocarbon group may be a partially or fully fluorinated hydrocarbon group. In one molecule represented by formula ID, the plurality of $R^{33}$s may be different from each other or may all be the same.

In formula IE, $R^{34}$ is a hydrogen atom or a monovalent organic group. The number of carbon atoms that the monovalent organic group has may be 1 to 20, may be 1 to 15, may be 2 to 10, and may be 2 to 6. The monovalent organic group is not particularly limited, and may be a monovalent group or the like having a chemical structure in which one or more carbon atoms (methylene groups) in a hydrocarbon group are substituted by a linking group of -O-, -S-, -C(=O)-, or -C(=O)O-. A hydrogen atom bonded to a hydrocarbon portion in the monovalent organic group may be substituted by a substituent. Here, the monovalent organic group is bonded to the oxygen atom (O) in formula IE by a carbon atom that the monovalent organic group has. The substituent may be a monovalent substituent such as a halogen atom, may be a monovalent electron-withdrawing group, and may be a fluorine atom. The monovalent organic group may be a hydrocarbon group or a halogen-substituted hydrocarbon group, and the halogen-substituted hydrocarbon group may be a partially or fully fluorinated hydrocarbon group. In one molecule represented by formula IE, the plurality of $R^{34}$s may be different from each other or may all be the same.

Specific examples of the boron compound include diborane, boron trifluoride, boric acid, boroxine, organoboron compounds such as trimethylborane, triethylborane, tri-n-propylborane, triisopropylborane, triphenylborane, trimethyl borate, triethyl borate, triphenyl borate, tri-n-propyl borate, triisopropyl borate, 2-methoxy-4,4,5,5-tetramethyl-1,3,2-dioxaborolane, 2-ethoxy-4,4,5,5-tetramethyl-1,3,2-dioxaborolane, 2,4,6-trimethylboroxine, 2,4,6-triethylboroxine, 2,4,6-trivinylboroxine, 2,4,6-trimethoxyboroxine, 2,4,6-trimethoxyboroxine, and triphenylboroxine, and halogen-substituted hydrocarbon groups such as tris(2,2,2-trifluoroethyl) borate, 2,4,6-tris(4-fluorophenyl)boroxine, and 2,4,6-tris(3,4,5-trifluorophenyl)boroxine.

Examples of the anion receptor having an aluminum atom include an aluminum compound that functions as a Lewis acid, and compounds represented by the formula $AlX^1_3$ (in the formula, $X^1$ is a halogen atom and may be a fluorine atom) and the formula: $Al(OR^{35})_3$ (in the formula, $R^{35}$ is a hydrocarbon group and may be an alkyl group).

Further, the anion receptor may be an azaether. An azaether is a compound in which -O- of an ether compound is replaced with $-NR^E-$(where $R^E$ is a hydrogen atom or an organic group). The azaether may be either a linear azaether or a cyclic azaether. The azaether may have an electron-withdrawing group in, for example, a hydrocarbon portion or the like.

The content of the anion receptor in the electrolyte composition may be 10 to 200 parts by mass, may be 30 to 180 parts by mass, may be 50 to 150 parts by mass, and may be 80 to 130 parts by mass, with respect to 100 parts by mass of the polymer of the present embodiment.

Examples of the plasticizer include an organic solvent. Examples of the organic solvent include an aprotic solvent. The organic solvent may include one or more organic solvents selected from the group consisting of carbonate-based solvents, ether-based solvents, fluorine-based solvents, nitrile-based solvents, and phosphate ester-based solvents, and may include a phosphate ester.

Examples of the carbonate-based solvent include linear carbonates such as dimethyl carbonate, diethyl carbonate, and ethyl methyl carbonate; and cyclic carbonates such as ethylene carbonate, propylene carbonate, butylene carbonate, and vinylene carbonate.

Examples of the ether-based solvent include cyclic ethers such as tetrahydrofuran, 2-methyltetrahydrofuran, tetrahydropyran, and 1,3-dioxolane; and linear ethers such as 1,2-diethoxyethane and ethoxymethoxyethane.

Examples of the fluorine-based solvent include hydrofluorocarbons such as perfluorooctane; hydrofluoroethers such as methyl nonafluorobutyl ether and ethyl nonafluorobutyl ether; and hydrofluoroolefins such as 1,3,3,3-tetrafluoropropene.

Examples of the phosphate ester include trimethyl phosphate (TMP), triethyl phosphate (TEP), and tris(2,2,2-trifluoroethyl) phosphate (TFEP).

In addition to the above, examples of the organic solvent also include solvents having a sulfonyl group such as dimethyl sulfoxide (DMSO); amide-based solvents such as dimethylformamide (DMF) and dimethylacetamide (DMA); organic solvents having a carbonyl group (-C(=O)-) such as acetone (referring to carbonyl compounds other than amide compounds, such as esters, ketones, and aldehydes); and nitrogen-containing aromatic compounds such as pyridine (compounds containing nitrogen as a ring member of an aromatic ring, which may be either a monocyclic system or a condensed ring system). The organic solvent may be used as a single type or as a mixed solvent including two or more types of organic solvents.

The content of the organic solvent in the electrolyte composition may be 100 to 500 parts by mass, may be 150 to 450 parts by mass, may be 200 to 400 parts by mass, and may be 250 to 350 parts by mass, with respect to 100 parts by mass of the polymer of the present embodiment.

The content of the organic solvent in the electrolyte composition may be 30 to 90 mass%, may be 35 to 85 mass%, may be 40 to 80 mass%, may be 45 to 75 mass%, may be 50 to 70 mass%, and may be 60 to 70 mass%, with respect to the total amount of the electrolyte composition.

The electrolyte composition may further include other resins such as a fluorine-based resin (such as a binding resin), a fabric such as a non-woven fabric, a porous material, a viscosity adjusting material, and the like. The electrolyte composition may include, as a fluorine-based resin, a resin having a carbon chain as a main chain. The carbon chain may be one formed by radical polymerization of an ethylenically unsaturated group. Examples of the fluorine resin include poly(vinylidene fluoride-co-hexafluoropropylene) (PVDF-HFP) and polyvinylidene fluoride (PVDF).

The content of the other resin in the electrolyte composition may be 10 to 100 parts by mass, may be 20 to 80 parts by mass, may be 30 to 70 parts by mass, and may be 40 to 60 parts by mass, with respect to 100 parts by mass of the polymer of the present embodiment.

The electrolyte composition may include an alkali metal salt. Examples of the alkali metal salt, where the alkali metal is M, include MF, MCl, MBr, MI, $MClO_4$, $MPF_6$, $MBF_4$, $M_2SO_4$, $M[(C_hF_{2h+1})SO_3]$ (h is 0 to 3), $M[(C_hF_{2h+1})SO_2]_2N$ (h is 0 to 3), and $M\{[(C_hF_{2h+1})SO_2]N[(C_iF_{2i+1})SO_2]\}$ (h, i are 0 to 3). One or more types of alkali metal salts may be used. The alkali metal included in the alkali metal salt may be the same alkali metal element as the alkali metal element that the structural unit (A) described in the explanation of the polymer of the present disclosure has.

The content of the alkali metal salt in the electrolyte composition may be 10 to 200 parts by mass, may be 20 to 150 parts by mass, may be 30 to 100 parts by mass, and may be 40 to 75 parts by mass, with respect to 100 parts by mass of the polymer of the present embodiment.

The method for producing the electrolyte composition is not particularly limited, but examples include a method of producing a dry film of the polymer of the present embodiment or a dry film by mixing the polymer of the present embodiment and a binding resin, and then impregnating the dry film with an organic solvent. When the electrolyte composition includes an alkali metal salt or an anion receptor, a dry film may be prepared by mixing the polymer and optionally a binding resin and the alkali metal salt or anion receptor, and then an organic solvent may be added, or the alkali metal salt or anion receptor may be dissolved in an organic solvent and added to the dry film.

The electrolyte composition of the present embodiment can be used as a composition for forming an electrolyte for batteries, capacitors, and the like. That is, the electrolyte of the present embodiment includes the electrolyte composition. Examples of the battery include batteries that perform charging and discharging by the movement of alkali metal ions, such as lithium-ion batteries and sodium-ion batteries. The battery may be a primary battery or a secondary battery, and may be a solid-state battery.

The battery of the present embodiment includes a positive electrode, a negative electrode, and an electrolyte disposed between the positive electrode and the negative electrode. The positive electrode may be one in which a layer including a positive electrode material is formed on a current collector. Further, the negative electrode may be one in which a layer including a negative electrode material is formed on a current collector. Hereinafter, a lithium-ion battery will be described as an example.

The negative electrode of the lithium-ion battery is not particularly limited, and may include a negative electrode

active material and, if necessary, a conductive auxiliary agent, a binder, and the like. Examples of the negative electrode active material include simple substances of elements such as Li, Si, P, Sn, Si-Mn, Si-Co, Si-Ni, In, and Au, and alloys or composites including these elements, carbon materials such as graphite, substances in which lithium ions are inserted between layers of the carbon material, and oxides containing titanium.

The positive electrode of the lithium-ion battery is not particularly limited, and may include a positive electrode active material and, if necessary, a conductive auxiliary agent, a binder, and the like. Examples of the positive electrode active material include a lithium composite metal oxide including lithium and a transition metal element. The transition metal element may be at least one selected from the group consisting of V, Cr, Mn, Fe, Co, Ni, Cu, and Al, and may include Ni. Examples of the lithium composite metal oxide include $LiCoO_2$, $LiNiO_2$, $LiMn_2O_4$, $LiNi_{0.5}Mn_{1.5}O_4$, $Li_2MnO_3$, $LiNi_xMn_yCo_{1-x-y}O_2$ [$0 < x+y < 1$]), $LiNi_xCo_yAl_{1-x-y}O_2$ [$0 < x+y < 1$]), $LiCr_{0.5}Mn_{0.5}O_2$, $LiFePO_4$, $Li_2FeP_2O_7$, $LiMnPO_4$, $LiFeBO_3$, $Li_3V_2(PO_4)_3$, $Li_2CuO_2$, $Li_2FeSiO_4$, and $Li_2MnSiO_4$. When the positive electrode active material includes an alkali metal element other than Li, specific examples thereof include those in which Li in the above specific examples is replaced with another alkali metal.

The negative electrode (negative electrode material) and the positive electrode (positive electrode material) of the present embodiment may further include a solid electrolyte material, a binding resin (binder), a conductive auxiliary agent, and the like.

The battery may have a separator. The separator may be a porous material, and may be a porous material made of resin. Specific examples include a porous polyolefin membrane and a porous ceramic membrane.

## Examples

(Example 1)

A lithiated carboxyl group-containing copolymer of Example 1 was produced by the following method.

Saccharin methacrylamide (SacM) (1.8848 g, 7.5 mmol), styrene (St) (0.86 mL, 7.5 mmol), tetralin (0.15 mL), and azobisisobutyronitrile (24.7 mg, 0.15 mmol) were dissolved in a mixed solvent of dioxane and acetonitrile (dioxane:acetonitrile = 1:1 (volume ratio)) (12.1 mL), and stirred at 60°C for 24 hours to obtain a solution of a copolymer of saccharin methacrylamide and styrene (raw material copolymer).

Next, a 25 mM phenothiazine solution in 1,4-dioxane (45.0 mL, 1.13 mmol) and 100 equivalents of water were added to the obtained polymer solution, and the mixture was stirred overnight. As a result, the structural units derived from saccharin methacrylamide in the raw material copolymer were hydrolyzed, and the amide bond including the saccharin moiety was converted to a -COOH group (that is, the structural units derived from saccharin methacrylamide were converted to methacrylic acid (MAA) units), to obtain a -COOH group-containing copolymer (0.61 g).

The composition ratio of the structural units in the polymer was MAA:St = 48:52 (molar ratio). The composition ratio was calculated by dissolving the polymer in deuterated dimethyl sulfoxide and measuring the $^1$H-NMR spectrum.

Then, the -COOH group-containing copolymer (0.61 g, 3.21 mmol) was dissolved in dimethylformamide (12 mL) to obtain a solution. To this solution, 2.5 equivalents of LiOH (449.1 mg, 18.82 mmol) with respect to the amount of SacM initially charged when producing the raw material copolymer was added, and the mixture was stirred at room temperature (25°C) for 3 days. As a result, a copolymer in which the - COOH groups of the -COOH group-containing copolymer were converted to -COOLi (lithiated carboxyl group-containing copolymer) was obtained (0.43 g).

The raw material copolymer was subjected to alcoholysis with methanol instead of water to synthesize a copolymer of MMA and St, and the molecular weight of the copolymer was measured by gel permeation chromatography. The number average molecular weight of the copolymer was 18200.

(Example 2)

A lithiated carboxyl group-containing copolymer of Example 2 was produced by the following method.

In Example 2, a monomer represented by the following formula (that is, 4-(2-methoxyethoxy)methoxystyrene) was used instead of styrene in Example 1.

[Chem. 9]

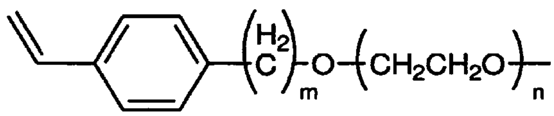

(Here, m=1, n=1)

Saccharin methacrylamide (SacM) (628.8 mg, 2.5 mmol), 4-(2-methoxyethoxy)methoxystyrene (0.49 mL, 2.5 mmol), and azobisisobutyronitrile (8.8 mg, 0.05 mmol) and (tetralin (0.05 mL)) were dissolved in a mixed solvent of dioxane and acetonitrile (dioxane:acetonitrile = 1:1 (volume ratio)) (3.75 mL), and stirred at 60°C for 24 hours to obtain a copolymer of SacM and 4-(2-methoxyethoxy)methoxystyrene (raw material copolymer).

Next, a 25 mM phenothiazine solution in 1,4-dioxane (15.0 mL, 0.38 mmol) and 100 equivalents of water were added to the obtained raw material copolymer, and the mixture was stirred overnight. As a result, the structural units derived from saccharin methacrylamide in the raw material copolymer were hydrolyzed, and the amide bond including the saccharin moiety was converted to a -COOH group (that is, the structural units derived from saccharin methacrylamide were converted to methacrylic acid (MAA) units), to obtain a -COOH group-containing copolymer (0.28 g).

The composition ratio of the structural units in the polymer was MAA:4-(2-methoxyethoxy)methoxystyrene = 47:53 (molar ratio). The composition ratio was calculated by dissolving the polymer in deuterated dimethyl sulfoxide and measuring the $^{1}$H-NMR spectrum.

Then, the -COOH group-containing copolymer (0.28 g, 1.00 mmol) was dissolved in dimethylformamide (4.6 mL) to obtain a solution. To this solution, 2.5 equivalents of LiOH (149.0 mg, 6.22 mmol) with respect to the amount of SacM initially charged when producing the raw material copolymer was added, and the mixture was stirred at room temperature (25°C) for 3 days (24 hours). As a result, a copolymer in which the -COOH groups of the -COOH group-containing copolymer were converted to -COOLi (lithiated carboxyl group-containing copolymer) was obtained (0.23 g). In the synthesized copolymer, since the $-COO^{-}$ group, which is the counter anion of the lithium ion, is fixed on the copolymer, it does not transfer even when a voltage is applied, and the lithium ion transference number was sufficiently high.

The raw material copolymer was subjected to alcoholysis with methanol instead of water to synthesize a copolymer of MMA and St, and the molecular weight of the copolymer was measured by gel permeation chromatography. The number average molecular weight of the copolymer was 30100.

(Comparative Example 1)

A lithiated carboxyl group-containing copolymer of Comparative Example 1 was produced by the following method.

tert-butyl methacrylate (tBMA) (1.22 mL, 7.5 mmol), styrene (St) (0.86 mL, 7.5 mmol), and azobisisobutyronitrile (20.0 mg, 0.12 mmol) were dissolved in toluene (13.0 mL), and stirred at 60°C for 24 hours to obtain a copolymer of tert-butyl methacrylate and styrene (raw material copolymer) (0.59 g). The composition ratio of the structural units in the raw material polymer was tBMA:St = 46:54 (molar ratio). The composition ratio was determined by dissolving the raw material polymer in deuterated chloroform and measuring the $^{1}$H NMR spectrum.

Next, an excess of trifluoroacetic acid (15.0 mL, 196 mmol) was added to the obtained raw material copolymer (0.59 g), and the mixture was stirred at 40°C for 24 hours. As a result, the $-C(=O)-O-C(CH_3)_3$ groups in the raw material copolymer were substituted with -COOH groups (that is, the structural units derived from tBMA were converted to methacrylic acid (MAA) units), to obtain a -COOH group-containing copolymer (0.36 g).

Then, the -COOH group-containing copolymer (0.36 g) was dissolved in dimethylformamide (3.0 mL) to obtain a solution. To this solution, 2.5 equivalents of LiOH with respect to the amount of tBMA initially charged when producing the raw material copolymer was added, and the mixture was stirred at room temperature (25°C) for 3 days. As a result, a copolymer in which the -COOH groups of the -COOH group-containing copolymer were converted to -COOLi (lithiated carboxyl group-containing copolymer) was obtained (0.26 g). The obtained lithiated carboxyl group-containing copolymer was dissolved in deuterated dimethyl sulfoxide, and the $^{1}$H NMR spectrum was measured, whereby the composition ratio of the structural units in the lithiated carboxyl group-containing copolymer was lithiated MAA:St = 47:53 (molar ratio).

<Solid $^{13}$C NMR Measurement>

Solid NMR was measured with an AVANCE III 800 manufactured by Bruker using a solid MAS BL4 probe under the conditions of a resonance frequency (external magnetic field) of 201 MHz, room temperature (25°C)/8 KHz MAS. From the obtained solid $^{13}$C NMR spectrum, the half width of the peak derived from the carbonyl carbon of the lithiated MAA unit in each copolymer was determined. The results are shown in Table 1.

<Solution $^{13}$C NMR Measurement>

The apparatus used was a JNM-ECA500 spectrometer (manufactured by JEOL Ltd.). $^{1}$H-NMR measurement was performed under the conditions of room temperature (25°C) and a resonance frequency (external magnetic field) of 500.16 MHz, and $^{13}$C-NMR measurement was performed under the conditions of 55°C and a resonance frequency (external magnetic field) of 125.04 MHz. For Example 1, a sample was prepared by dissolving 100 mg of the copolymer in 0.6 mL of $CD_3OD$. For Comparative Example 1, a sample was prepared by dissolving 120 mg of the copolymer in 0.6 mL of

$CD_3OD$. The results are shown in Table 1.

[Table 1]

| Polymer | Solid-state NMR | Liquid NMR (in $CD_3OD$) | |
|---|---|---|---|
| | Half width (Hz) | Half width (Hz) | Peak height/Half width (abn/Hz) |
| Example 1 | 1230 | 34.1 | $1.53 \times 10^{-4}$ |
| Example 2 | 1145 | - | - |
| Comparative Example 1 | 1404 | 83.6 | $0.35 \times 10^{-4}$ |

(Production of Electrolyte Composition)

Each electrolyte composition was produced by mixing the components in the compositions shown in Table 2.

Here, the abbreviations and the like in Table 2 are as follows.

TMP: trimethyl phosphate
TEP: triethyl phosphate
EC: ethylene carbonate
PC: propylene carbonate
PVDF-HFP: poly(vinylidene fluoride-co-hexafluoropropylene)

<Measurement of Ionic Conductivity>

The ionic conductivity of the electrolyte composition was measured by the method shown below. The ionic conductivity at 25°C ($\sigma_{25}$) is shown in Table 2.

First, an evaluation cell of a coin-type battery CR2032 was assembled in a glove box under a dry argon atmosphere. Specifically, a test laminate was produced by laminating each layer in the order of stainless steel plate/electrolyte composition/stainless steel plate in the evaluation cell.

Measurement is performed using an impedance measurement device at 25°C, a frequency range of 0.1 Hz to 1 MHz, and an applied voltage of 10 mV (vs. open circuit voltage). The ionic conductivity $\sigma$ can be calculated by the following formula. In the formula below, R represents the impedance value, A represents the area of the sample, and t represents the thickness of the sample.

$$\sigma\ (S \cdot cm^{-1}) = t\ (cm) / (R\ (\Omega) \times A\ (cm^2))$$

<Activation Energy>

Ionic conductivity measurement using the above evaluation cell was also performed under the conditions of 25, 30, 40, 50, 60, and 70°C, and the change in ionic conductivity with respect to temperature was measured. The activation energy was calculated from the slope of the graph of the common logarithm of ionic conductivity versus the reciprocal of temperature according to the Arrhenius equation (log k = log A - Ea/RT, where k: reaction rate constant, A: frequency factor, Ea: activation energy, R: gas constant, T: absolute temperature). The results are shown in Table 2.

[Table 2]

| Electrolyte composition | Components of electrolyte composition | | | | | σ25 [S/cm] | Ea [kJ/mol] |
|---|---|---|---|---|---|---|---|
| | Copolymer | | PVDF-HFP | Organic solvent | | | |
| | Type | Content | Content | Composition | Content | | |
| Example A1 | Example 1 | 100 | 50 | TMP:EC:PC =50:25:25 | 300 | $0.84 \times 10^{-5}$ | 18.1 |
| Comparative Example A1 | Comparative Example 1 | | | | | $0.42 \times 10^{-5}$ | 14.5 |
| Example A2 | Example 1 | | | TMP:EC:PC =50:25:25 | | $2.50 \times 10^{-5}$ | 15.2 |
| Comparative Example A2 | Comparative Example 1 | | | | | $0.72 \times 10^{-5}$ | 17.7 |
| * The content of each component and the composition of the organic solvent are all in mass ratio. | | | | | | | |

(Production of Electrolyte Composition)

Each electrolyte composition including an anion receptor was produced by mixing the components in the compositions of Table 3 and Table 4, and the ionic conductivity at 25°C and the activation energy were determined by the method described above.

Here, the abbreviations and the like in Table 3 and Table 4 are as follows. In addition, lithium (bis(trifluoromethanesulfonyl)imide)

(LiTFSI) was used as the lithium salt in Table 4.
MTD: 2-methoxy-4,4,5,5-tetramethyl-1,3,2-dioxaborolane
TEB: tris(2,2,2-trifluoroethyl) borate
TFB: 2,4,6-tris(4-fluorophenyl)boroxine
PVDF-HFP: poly(vinylidene fluoride-co-hexafluoropropylene)

The electrolyte compositions of Examples A8 and A9 were produced by preparing a dry film by mixing the polymer and PVDF-HFP, and impregnating the dry film with an organic solvent in which a lithium salt and an anion receptor were dissolved.

Further, the electrolyte composition of Example A10 was produced by preparing a dry film by mixing the polymer, PVDF-HFP, a lithium salt, and an anion receptor, and impregnating the dry film with an organic solvent.

[Table 3]

| Electrolyte composition | Components of electrolyte composition | | | | | | | σ25 [S/cm] | Ea [kJ/mol] |
|---|---|---|---|---|---|---|---|---|---|
| | Copolymer | | PVDF-HFP | Anion receptor | | Organic solvent | | | |
| | Type | Content | Content | Type | Content | Composition | Content | | |
| Example A2 | Example 1 | 100 | 50 | - | 0 | TEP:EC:PC =50:25:25 | 300 | $2.5 \times 10^{-5}$ | 15.2 |
| Example A5 | | | | TEB | 100 | | | $2.6 \times 10^{-5}$ | 19.2 |
| Example A6 | | | | TFB | | EC:PC =50:50 | | $1.2 \times 10^{-5}$ | 28.5 |
| Example A7 | | | | | | TEP:EC:PC =50:25:25 | | $6.1 \times 10^{-5}$ | 22.3 |
| * The content of each component and the composition of the organic solvent are in mass ratio. | | | | | | | | | |

[Table 4]

| Electrolyte composition | Components of electrolyte composition | | | | | | | | $\sigma_{25}$ [S/cm] | Ea [kJ/mol] |
|---|---|---|---|---|---|---|---|---|---|---|
| | Copolymer | | PVDF-HFP | Anion receptor | | Organic solvent | | Lithium salt | | |
| | Type | Content | Content | Type | Content | Composition | Content | Content | | |
| Example A8 | Example 1 | 100 | 50 | MTD | 100 | TEP:EC:PC =50:25:25 | 450 | 50 | $3.6 \times 10^{-4}$ | 15.9 |
| Example A9 | | | | TEB | | | | | $4.5 \times 10^{-5}$ | 16.3 |
| Example A10 | | | | TFB | | | | | $1.4 \times 10^{-5}$ | 14.2 |

* The content of each component and the composition of the organic solvent are in mass ratio.

(Production of Electrolyte Composition)

Each electrolyte composition including an anion receptor was produced by mixing the components in the composition of Table 5, and the ionic conductivity at 25°C and the activation energy were determined by the method described above.

[Table 5]

| Electrolyte composition | Components of electrolyte composition | | | | | $\sigma_{25}$ [S/cm] | Ea [kJ/mol] |
|---|---|---|---|---|---|---|---|
| | Copolymer | | PVDF-HFP | Organic solvent | | | |
| | Type | Content | Content | Composition | Content | | |
| Example B1 | Example 2 | 100 | 50 | TEP:EC:PC=50:25:25 | 300 | $2.7 \times 10^{-5}$ | 14.9 |
| * The content of each component and the composition of the organic solvent are all in mass ratio. | | | | | | | |

<Measurement of Lithium Ion Transference Number>

The lithium ion transference number of the electrolyte composition produced as described above was measured by the following method. The results are shown in Table 6.

First, an evaluation cell of a coin-type lithium battery CR2032 was assembled in a glove box under a dry argon atmosphere. Specifically, a test laminate was produced by laminating each layer in the order of lithium/electrolyte composition/lithium in the evaluation cell.

The method for measuring the lithium ion transference number is one introduced in Polymer, 28, 2324 (1987). That is, at room temperature (25°C), 10 mV was applied to the test laminate, the initial current value ($I_0$) and the steady current value ($I_{ss}$) were measured, and further, the interface resistance measurement value $R_0$ before voltage application and the interface resistance measurement value $R_{SS}$ after voltage application were determined by the complex impedance method. Then, the obtained values were introduced into the following formula to determine the lithium ion transference number ($t_{Li+}$). V in the formula is the applied voltage.

$$t_{Li+} = I_{ss}(V - I_0R_0) / I_0(V - I_{SS}R_{SS})$$

[Table 6]

| Electrolyte composition | $Li^+$ transference number |
|---|---|
| Example A10 | 0.85 |
| Example A2 | 0.81 |
| Example B1 | 0.94 |
| Example A6 | 0.80 |

**Claims**

**1.** A polymer comprising:

a structural unit (A) represented by the following formula (A); and
a structural unit (B) represented by the following formula (B),
wherein the polymer satisfies at least one of the following (1) to (3):

(1) when solid $^{13}C$ NMR measurement of the polymer is performed at 25°C, a half width of a peak derived from carbonyl carbon of a -COOA group (A is an alkali metal element) is 1380 Hz or less;
(2) when $^{13}C$ NMR measurement of the polymer is performed in deuterated methanol at 55°C, a half width of a peak derived from carbonyl carbon of the -COOA group is 80 Hz or less; and
(3) when $^{13}C$ NMR measurement of the polymer is performed in deuterated methanol at 55°C, a ratio of peak

height to half width of a peak derived from carbonyl carbon of the -COOA group is $0.4\times10^{-4}$ abn/Hz or more.

[Chem. 1]

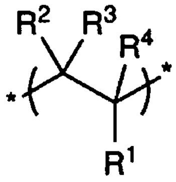

(A)

(In formula (A), $R^1$ is a -COOA group or a monovalent organic group having a -COOA group; $R^2$ to $R^4$ are each independently a hydrogen atom or a monovalent substituent, or one of $R^2$ and $R^3$ is a hydrogen atom or a monovalent substituent and the other forms a ring together with $R^4$; and * represents a bonding site of the structural unit (A) with another structural unit.)

[Chem. 2]

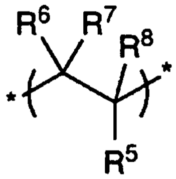

(B)

(In formula (B), $R^5$ is a hydrogen atom or a monovalent substituent; $R^6$ to $R^8$ are each independently a hydrogen atom or a monovalent substituent, or one of $R^6$ and $R^7$ is a hydrogen atom or a monovalent substituent and the other forms a ring together with $R^8$; and * represents a bonding site of the structural unit (B) with another structural unit.)

**2.** The polymer according to claim 1, wherein A comprises at least one of sodium and lithium.

**3.** An electrolyte composition comprising the polymer according to claim 1 or 2.

**4.** The electrolyte composition according to claim 3, further comprising a plasticizer,
wherein the plasticizer comprises at least one selected from the group consisting of carbonate-based solvents, ether-based solvents, fluorine-based solvents, and phosphate ester-based solvents.

**5.** The electrolyte composition according to claim 3, further comprising an anion receptor.

**6.** The electrolyte composition according to claim 3, further comprising an alkali metal salt.

**7.** A polymer obtained by polymerizing a monomer mixture comprising a monomer (A) having a -COOA group (A is an alkali metal element) and a monomer (B) other than the monomer (A), wherein a reactivity ratio r1 of the monomer (A) and a reactivity ratio r2 of the monomer (B) in a polymerization reaction of the monomer (A) and the monomer (B) are both 0.5 or less.

**8.** A battery comprising the electrolyte composition according to claim 3.

**INTERNATIONAL SEARCH REPORT**

International application No.
**PCT/JP2024/016903**

**A. CLASSIFICATION OF SUBJECT MATTER**

***C08F 8/44***(2006.01)i; ***C08F 220/04***(2006.01)i; ***C08K 5/00***(2006.01)i; ***C08L 33/02***(2006.01)i; ***H01M 10/052***(2010.01)i; ***H01M 10/0565***(2010.01)i
FI: C08F8/44; C08F220/04; C08K5/00; C08L33/02; H01M10/052; H01M10/0565

According to International Patent Classification (IPC) or to both national classification and IPC

**B. FIELDS SEARCHED**

Minimum documentation searched (classification system followed by classification symbols)

C08F8/44; C08F220/04; C08K5/00; C08L33/02; H01M10/052; H01M10/0565

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2001-176556 A (ILION TECHNOLOGY CORP.) 29 June 2001 (2001-06-29) claims, examples | 1-6, 8 |
| A | JP 2022-174686 A (KYOTO UNIVERSITY) 24 November 2022 (2022-11-24) claims, examples | 1-6, 8 |
| A | WO 2008/056704 A1 (TOYOTA JIDOSHA KABUSHIKI KAISHA) 15 May 2008 (2008-05-15) claims, examples | 1-6, 8 |
| A | JP 59-230046 A (KURARAY CO., LTD.) 24 December 1984 (1984-12-24) claims, examples | 1-6, 8 |
| A | JP 2006-185744 A (SUMITOMO BAKELITE CO., LTD.) 13 July 2006 (2006-07-13) claims, examples | 1-6, 8 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 July 2024** | **23 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
PCT/JP2024/016903

C. DOCUMENTS CONSIDERED TO BE RELEVANT

| Category* | Citation of document, with indication, where appropriate, of the relevant passages | Relevant to claim No. |
| --- | --- | --- |
| A | JP 2005-517779 A (PPG INDUSTRIES OHIO, INC.) 16 June 2005 (2005-06-16) claims, examples | 1-6, 8 |

Form PCT/ISA/210 (second sheet) (July 2022)

**INTERNATIONAL SEARCH REPORT**

International application No.
**PCT/JP2024/016903**

**Box No. III Observations where unity of invention is lacking (Continuation of item 3 of first sheet)**

This International Searching Authority found multiple inventions in this international application, as follows:

Document 1: JP 2001-176556 A (ILION TECHNOLOGY CORP.) 29 June 2001 (2001-06-29)

The claims are classified into the following two inventions.

(Invention 1) Claims 1-6 and 8

Claim 1 has the special technical feature of "a polymer including structural unit (A) represented by formula (A), and structural unit (B) represented by formula (B), wherein the polymer satisfies at least one among (1) to (3) below. ((1) when measurement of solid$^{13}$CNMR of the polymer is performed at 25°C, the half width of the peak derived from carbonyl carbon of a -COOA group (where A is an alkali metal element) is 1380 Hz or lower; (2) when measurement of$^{13}$CNMR of the polymer is performed at 55°C in heavy methanol, the half width of the peak derived from carbonyl carbon of the -COOA group is 80 Hz or lower; (3) when measurement of$^{13}$CNMR of the polymer is performed at 55°C in heavy methanol, the ratio of peak height to the half width of the peak derived from carbonyl carbon of the -COOA group is $0.4\times10^{-4}$abn/Hz or higher)". Claims 2-6 and 8 share the same features with claim 1.

Therefore, claims 1-6 and 8 are classified as invention 1.

(Invention 2) Claim 7

Claim 7 shares, with claim 1 classified as invention 1, the feature of a polymer obtained by polymerizing a monomer mixture containing a monomer (A) having a -COOA group (A is an alkali metal element), and a monomer (B) other than the monomer (A). However, this feature does not make a contribution over the prior art in light of the content disclosed in document 1, and thus this feature cannot be said to be a special technical feature. Furthermore, there are no other identical or corresponding special technical features between these inventions.

Additionally, claim 7 does not depend from claim 1. Moreover, claim 7 is not substantially identical to or similarly closely related to any of the claims classified as invention 1.

Therefore, claim 7 cannot be classified as invention 1.

Accordingly, claim 7 is classified as invention 2.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **Claims 1-6 and 8**

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

**INTERNATIONAL SEARCH REPORT**
**Information on patent family members**

International application No.
**PCT/JP2024/016903**

| Patent document cited in search report | Publication date (day/month/year) | Patent family member(s) | Publication date (day/month/year) |
|---|---|---|---|
| JP 2001-176556 A | 29 June 2001 | EP 1098382 A2<br>claims, examples | |
| JP 2022-174686 A | 24 November 2022 | (Family: none) | |
| WO 2008/056704 A1 | 15 May 2008 | US 2010/0104917 A1<br>claims, examples<br>EP 2081195 A1<br>CN 101536115 A | |
| JP 59-230046 A | 24 December 1984 | (Family: none) | |
| JP 2006-185744 A | 13 July 2006 | (Family: none) | |
| JP 2005-517779 A | 16 June 2005 | US 2003/0170394 A1<br>claims, examples<br>JP 2005-517776 A<br>JP 2007-297638 A<br>JP 2007-321154 A<br>JP 2009-155663 A<br>US 6787597 B1<br>US 2004/0176558 A1<br>US 2004/0249077 A1<br>EP 1474453 A1<br>EP 1474456 A1<br>CN 1643008 A<br>CN 1642996 A<br>KR 10-0586127 B1<br>KR 10-0618741 B1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001176556 A
- US 6022643 A
- US 5705689 A
- US 6120941 A